# EUROPEAN PATENT APPLICATION

(11) **EP 4 675 526 A1**
(43) Date of publication of application: **07.01.2026**
(21) Application number: 25152571.3
(22) Date of filing: 17.01.2025
(51) Int. Cl.: G06Q 10/0633, G06F 3/12, G06Q 10/0639, G06Q 50/04, G06Q 10/10

(54) **INFORMATION PROCESSING SYSTEM, INFORMATION PROCESSING METHOD, AND PROGRAM**

(30) Priority: 01.07.2024 JP 2024106348
(71) Applicant: FUJIFILM Business Innovation Corp., Minato-ku Tokyo (JP)
(72) Inventor: SASAKI, Kimihiko, Yokohama-shi (JP); NOGUCHI, Daisuke, Yokohama-shi (JP); ARAKAWA, Kei, Yokohama-shi (JP); MARUYAMA, Kosuke, Yokohama-shi (JP); NAGASHIMA, Kazuki, Yokohama-shi (JP)
(74) Representative: Haseltine Lake Kempner LLP

(57) **Abstract**

An information processing system includes one or more processors configured to: acquire, as information pertaining to specifications of a printed product to be produced, finalized information pertaining to specifications that are finalized and unfinalized information pertaining to specifications that are not finalized; and display, on a screen for managing processes involved in the production of the printed product, the finalized information and the unfinalized information with a distinguishable appearance for each process.

## Description

### Background

### (i) Technical Field

The present disclosure relates to an information processing system, an information processing method, and a program.

### (ii) Related Art

To mitigate the risk of an order-receiving party mistakenly starting production of an ordered product of which the specifications are not finalized, a known technology presents, to the order-receiving party, information indicating that the specifications are finalized (for example, see Japanese Unexamined Patent Application Publication No. 2023-57701).

### Summary

Finalizing the specifications of an ordered product before starting production may mitigate risk for the order-receiving party, but in some cases, starting production while some of the specifications are not finalized may be beneficial to the order-receiving party, such as allowing for faster delivery. In light of such circumstances, even if some of the specifications of an ordered product are not finalized, the order-receiving party may wish to start production of an ordered product according to the content of the specifications that are not finalized.

Accordingly, it is an object of the present disclosure to enable the order-receiving party to decide whether or not to start processes involved in the production of a printed product, even if some of the specifications of the printed product for which an order has been received are not finalized.

According to a first aspect of the present disclosure, there is provided an information processing system including one or more processors configured to: acquire, as information pertaining to specifications of a printed product to be produced, finalized information pertaining to specifications that are finalized and unfinalized information pertaining to specifications that are not finalized; and display, on a screen for managing processes involved in the production of the printed product, the finalized information and the unfinalized information with a distinguishable appearance for each process.

According to a second aspect of the present disclosure, in the information processing system according to the first aspect, the one or more processors are configured to display, as the unfinalized information, a current status of the specifications that are not finalized.

According to a third aspect of the present disclosure, in the information processing system according to the second aspect, the one or more processors are configured to display a current status of one or more pieces of information from among received order information pertaining to a received order for the printed product, apparatus information pertaining to an apparatus used in the production of the printed product, consumables information pertaining to consumables used by the apparatus, and production manager information pertaining to a person in charge of each of the processes involved in the production of the printed product.

According to a fourth aspect of the present disclosure, in the information processing system according to the second or third aspect, the one or more processors are configured to display a current status of steps up to finalizing specifications.

According to a fifth aspect of the present disclosure, in the information processing system according to any one of the second to fourth aspects, the one or more processors are configured to display, in addition to the current status, information pertaining to impact due to specifications not being finalized.

According to a sixth aspect of the present disclosure, in the information processing system according to the fifth aspect, the one or more processors are configured to display, as the information pertaining to impact, a process that is impacted from among a plurality of processes for producing the printed product.

According to a seventh aspect of the present disclosure, in the information processing system according to the fifth aspect, the one or more processors are configured to display, as the information pertaining to impact, a printed product that is impacted from among a plurality of other printed products different from the printed product.

According to an eighth aspect of the present disclosure, in the information processing system according to the seventh aspect, the one or more processors are configured to further display a process that is impacted from among a plurality of processes for producing the printed product that is impacted.

According to a ninth aspect of the present disclosure, in the information processing system according to the eighth aspect, the one or more processors are configured to display the finalized information and the unfinalized information with a distinguishable appearance on a terminal operated by a person in charge of the process that is impacted, and not display the finalized information and the unfinalized information with a distinguishable appearance on a terminal operated by a person in charge of a process that is not impacted.

According to a 10th aspect of the present disclosure, in the information processing system according to the fifth aspect, the one or more processors are configured to output a predetermined warning according to a degree of the impact.

According to an 11th aspect of the present disclosure, there is provided an information processing method including: acquiring, as information pertaining to specifications of a printed product to be produced, finalized information pertaining to specifications that are finalized and unfinalized information pertaining to specifications that are not finalized; and displaying, on a screen for managing processes involved in the production of the printed product, the finalized information and the unfinalized information with a distinguishable appearance for each process.

According to a 12th aspect of the present disclosure, there is provided a program causing a computer to execute a process including: acquiring, as information pertaining to specifications of a printed product to be produced, finalized information pertaining to specifications that are finalized and unfinalized information pertaining to specifications that are not finalized; and displaying, on a screen for managing processes involved in the production of the printed product, the finalized information and the unfinalized information with a distinguishable appearance for each process.

According to the first aspect of the present disclosure, an order-receiving party is able to decide whether or not to start processes involved in the production of a printed product, even if some of the specifications of the printed product for which an order has been received are not finalized.

According to the second aspect of the present disclosure, the order-receiving party is able to decide whether or not to start processes involved in the production of a printed product according to the current status of the specifications that are not finalized.

According to the third aspect of the present disclosure, the order-receiving party is able to decide whether or not to start processes involved in the production of a printed product according to the current status of one or more pieces of information from among received order information, apparatus information, consumables information, and production manager information as the current status of the specifications that are not finalized.

According to the fourth aspect of the present disclosure, the order-receiving party is able to decide whether or not to start processes involved in the production of a printed product according to the current status of steps up to finalizing the specifications.

According to the fifth aspect of the present disclosure, the order-receiving party is able to decide whether or not to start processes involved in the production of a printed product.

According to the sixth aspect of the present disclosure, the order-receiving party is able to decide whether or not to start processes involved in the production of a printed product according to a process that is impacted due to the specifications not being finalized.

According to the seventh aspect of the present disclosure, the order-receiving party is able to decide whether or not to start processes involved in the production of a printed product according to another printed product that is impacted due to the specifications not being finalized.

According to the eighth aspect of the present disclosure, the order-receiving party is able to grasp which processes for other printed products are impacted due to the specifications not being finalized.

According to the ninth aspect of the present disclosure, confusion due to the presence of useless information is alleviated.

According to the 10th aspect of the present disclosure, a production manager is able to grasp the degree of impact due to the specifications not being finalized.

According to the 11th aspect of the present disclosure, an order-receiving party is able to decide whether or not to start processes involved in the production of a printed product, even if some of the specifications of the printed product for which an order has been received are not finalized.

According to the 12th aspect of the present disclosure, an order-receiving party is able to decide whether or not to start processes involved in the production of a printed product, even if some of the specifications of the printed product for which an order has been received are not finalized.

### Brief Description of the Drawings

An exemplary embodiment of the present disclosure will be described in detail based on the following figures, wherein:
Fig. 1 is a diagram illustrating an example of the overall configuration of an information processing system to which an exemplary embodiment is applied;
Fig. 2 is a diagram illustrating an example of the hardware configuration of a management server included in the information processing system in Fig. 1;
Fig. 3 is a diagram illustrating an example of the functional configuration of a control unit of a management server;
Fig. 4 is a diagram illustrating a specific example of the specifications of a printed product to be produced by printing and other related equipment included in the information processing system 1 in Fig. 1;
Fig. 5 is a diagram illustrating a specific example of processes involved in the production of a printed product;
Fig. 6 is a diagram illustrating a specific example of statuses indicating the current status of steps up to finalizing "manuscript" out of the specifications of a printed product to be produced;
Fig. 7 is a diagram illustrating a specific example of statuses indicating the current status of steps up to finalizing "number of copies (quantity)" out of the specifications of a printed product to be produced;
Fig. 8 is a flowchart illustrating a specific example of the relationship between the order-placing side and the order-receiving side for a printed product;
Fig. 9 is a diagram illustrating a specific example of a method for managing the current status of steps up to finalizing the specifications of a printed product to be produced;
Figs. 10A and 10B are diagrams illustrating specific examples of a warning outputted according to the degree of impact due to the specifications of a printed product not being finalized;
Fig. 11 is a diagram illustrating a specific example of finalized information and unfinalized information displayed with a distinguishable appearance on a process management screen;
Fig. 12 is a diagram illustrating a specific example of a workflow out of a process management screen;
Fig. 13 is a diagram illustrating a specific example of a workflow out of a process management screen;
Fig. 14 is a diagram illustrating a specific example of a schedule management screen out of a process management screen;
Fig. 15 is a diagram illustrating a specific example of a schedule management screen out of a process management screen; and
Fig. 16 is a diagram illustrating a specific example of a product list screen out of a process management screen.

### Detailed Description

Hereinafter, an exemplary embodiment of the present disclosure will be described in detail and with reference to the attached drawings.

### <Configuration of information processing system 1>

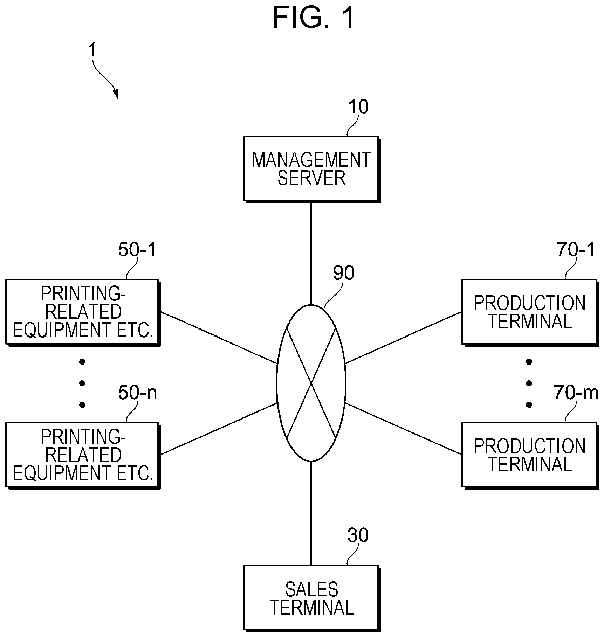

Fig. 1 is a diagram illustrating an example of the overall configuration of an information processing system 1 to which the exemplary embodiment is applied. The information processing system 1 is formed from a management server 10, a sales terminal 30, printing and other related equipment 50-1 to 50-n (where n is an integer equal to or greater than 1), and production terminals 70-1 to 70-m (where m is an integer equal to or greater than 1), these being connected over a network 90. The network 90 is a local area network (LAN) or the Internet, for example. Hereinafter, the printing and other related equipment 50-1 to 50-n will be collectively referred to as the "printing and other related equipment 50" when not being distinguished individually. Likewise, the production terminals 70-1 to 70-m will be collectively referred to as the "production terminal 70" when not being distinguished individually.

### (Management server 10)

The management server 10 is an information processing apparatus acting as a server that manages the information processing system 1 as a whole. The management server 10 is capable of executing an application program that makes the information processing system 1 available for use. The management server 10 is capable of acquiring various information transmitted from each of the sales terminal 30, the printing and other related equipment 50, and the production terminal 70, and performing various kinds of processing. The management server 10 is also capable of transmitting various information to the sales terminal 30, the printing and other related equipment 50, and the production terminal 70, and causing various kinds of processing to be performed.

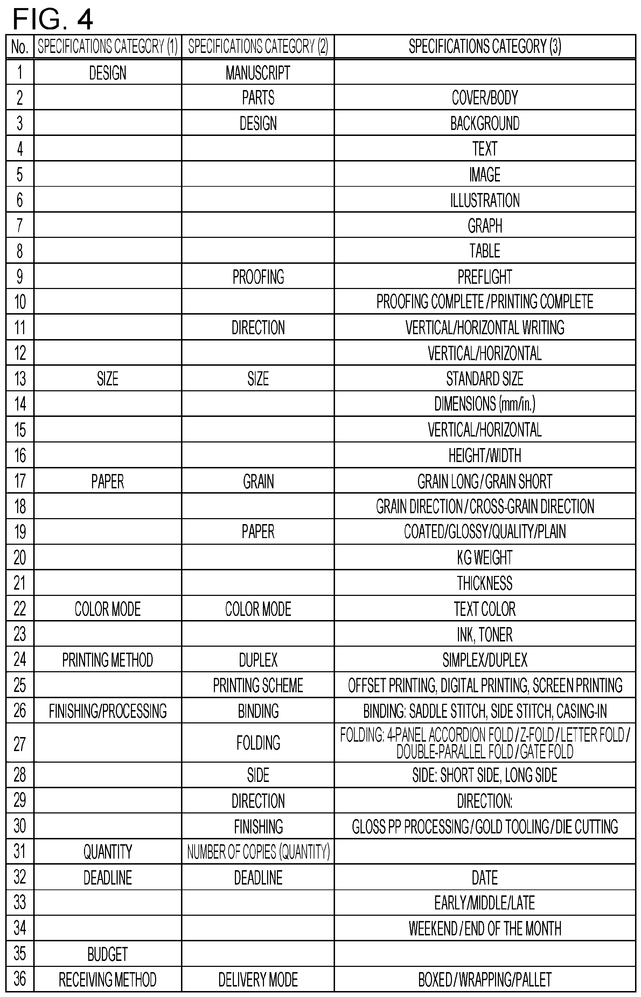

As an example, the management server 10 acquires information (hereinafter referred to as "received order information") pertaining to a received order for a printed product. The received order information includes various information, such as a deadline for the printed product for which an order has been received, for example. The received order information is information that is transmitted from the sales terminal 30 to the management server 10. As another example, the management server 10 acquires information pertaining to the specifications of a printed product to be produced. As a specific example of the information pertaining to the specifications of a printed product for which an order has been received, the management server 10 acquires information (hereinafter referred to as "finalized specifications") pertaining to specifications that are finalized and information (hereinafter referred to as "unfinalized information") pertaining to specifications that are not finalized. The finalized information and unfinalized information that serves as the information pertaining to the specifications of a printed product for which an order has been received is information that is transmitted from the sales terminal 30 to the management server 10. The specifications of a printed product include the design, size, paper, color mode, printing method, finishing, processing, quantity, deadline, budget, and receiving method, for example. Note that a specific example of the specifications of a printed product will be described later with reference to Fig. 4.

The management server 10 generates a screen (hereinafter referred to as the "process management screen") for managing processes involved in the production of a printed product, and displays the process management screen on each of the sales terminal 30 and the production terminal 70. Hereinafter, the management server 10 "displaying the process management screen" means causing the sales terminal 30 or the production terminal 70 to display the process management screen under control by the management server 10.

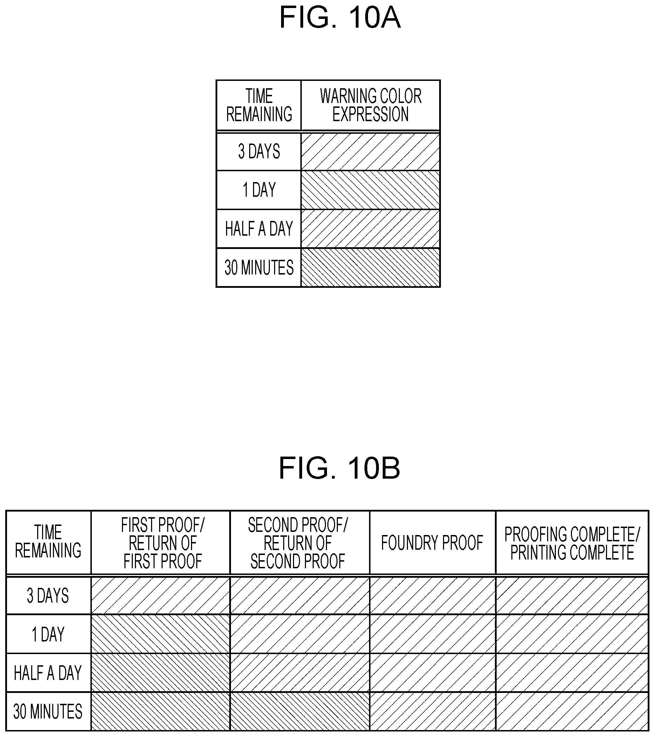

When generating the process management screen, the management server 10 causes the process management screen to reflect the finalized information and unfinalized information. The management server 10 displays finalized information and unfinalized information with a distinguishable appearance for each process on the process management screen. A distinguishable appearance means, for example, creating a difference through the use of opacity and transparency, different icons, different colors, or different typography such as the font. Note that specific examples of finalized information and unfinalized information displayed with a distinguishable appearance for each process will be described later with reference to Figs. 10 to 16.

As an example of unfinalized information, the management server 10 displays the current status of specifications that are not finalized with a distinguishable appearance for each process. Specifically, as the current status of specifications that are not finalized, the management server 10 displays an indication of which specifications are unfinalized in what kind of state, with a distinguishable appearance for each process. In addition, the management server 10 may also display information pertaining to the impact due to the specifications not being finalized. For example, the management server 10 may display information about downstream processes, other printed products (and processes thereof), and the like that are impacted due to the specifications not being finalized from among multiple processes for producing a printed product.

As another example, the management server 10 displays the current status of received order information for a printed product. As another example, the management server 10 displays the current status of information (hereinafter referred to as "apparatus information") pertaining to an apparatus used to produce a printed product. Apparatus information includes information about the operating status and the like of the printing and other related equipment 50 described later.

As another example, the management server 10 displays the current status of information (hereinafter referred to as "consumables information") pertaining to consumables used to produce a printed product. Consumables information includes various information pertaining to consumables such as paper, ink, and toner used in printing. As another example, the management server 10 displays the current status of information (hereinafter referred to as the "production manager information") pertaining to a person (hereinafter referred to as the "production manager") in charge of each process in the production of a printed product. Production manager information includes various information pertaining to the production manager of each process involved in the production of a printed product.

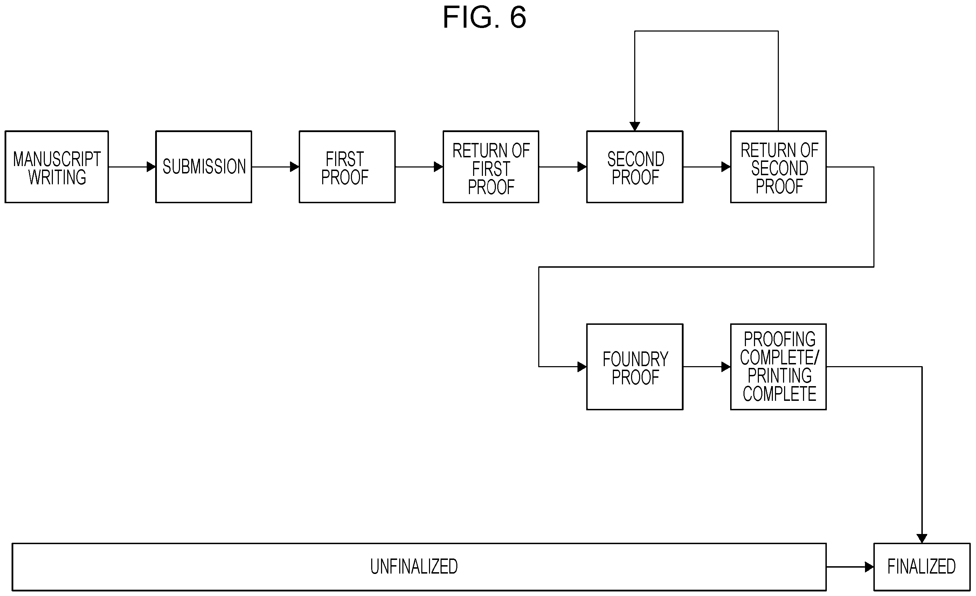

As another example, the management server 10 displays a status indicating the current status of steps up to finalizing the specifications of a printed product. In this case, the status refers to various statuses such as manuscript writing, submission, first proof, return of first proof, second proof, return of second proof, foundry proof, proofing complete, and printing complete, for example. Note that a specific example of the steps up to finalizing the specifications of a printed product will be described later with reference to Fig. 6.

As another example of information pertaining to the impact due to the specifications not being finalized, the management server 10 displays a printed product that is impacted due to the specifications not being finalized from among other printed products different from the printed product to be produced. In this case, the management server 10 further displays a process that is impacted due to the specifications not being finalized from among the multiple processes for producing a printed product that is impacted due to the specifications not being finalized.

The management server 10 also displays finalized information and unfinalized information with a distinguishable appearance on the production terminal 70 that is operated by the production manager in charge of a printed product that is impacted due to the specifications not being finalized. On the other hand, the management server 10 does not display finalized information and unfinalized information with a distinguishable appearance on the production terminal 70 that is operated by the production manager in charge of a printed product that is not impacted due to the specifications not being finalized.

The management server 10 also outputs a predetermined warning according to the degree of impact due to the specifications not being finalized. For example, the management server 10 outputs a display indicating the warning, a warning sound, speech expressing the warning, or the like on the sales terminal 30 and the production terminal 70. "Output" in this case means displaying a color indicating a warning on a display of the sales terminal 30 and the production terminal 70, outputting a warning sound or speech expressing the warning from a speaker of the sales terminal 30 and the production terminal 70, or the like. Note that details regarding the configuration of, and processing by, the management server 10 will be described later.

### (Sales terminal 30)

The sales terminal 30 is an information processing apparatus such as a personal computer, a tablet, or a smartphone operated by a sales representative who does the work of receiving orders for printed products. The sales terminal 30 is capable of executing an application program that makes the information processing system 1 available for use. The sales terminal 30 is capable of acquiring various information transmitted from the management server 10, the printing and other related equipment 50, the production terminal 70, and external equipment, and performing various kinds of processing. The sales terminal 30 is also capable of transmitting various information to the management server 10, the printing and other related equipment 50, the production terminal 70, and external equipment.

For example, the sales terminal 30 accepts the input of received order information for a printed product and information pertaining to the specifications of the printed product for which an order has been received. The information pertaining to the specifications of a printed product accepted as input by the sales terminal 30 includes finalized information pertaining to specifications that are finalized and unfinalized information pertaining to specifications that are not finalized.

The sales terminal 30 also displays the process management screen generated by the management server 10 on a display of a display unit or the like. The process management screen displayed on a display or the like reflects the finalized information and the unfinalized information. On the process management screen, the finalized information and the unfinalized information are displayed with a distinguishable appearance for each process.

The sales terminal 30 also outputs a display indicating a warning, a warning sound, speech expressing a warning, or the like according to the degree of impact due to the specifications not being finalized. Note that details regarding the configuration of, and processing by, the sales terminal 30 will be described later.

### (Printing and other related equipment 50)

The printing and other related equipment 50 is various equipment such as printers and bookbinding machines operated in the production of a printed product by a production manager involved in the production of the printed product. Process management of the printing and other related equipment 50 is performed by the information processing system 1. The printing and other related equipment 50 is capable of acquiring various information transmitted from the management server 10, the production terminal 70, and external equipment, and performing various processing involved in the production of a printed product. The printing and other related equipment 50 is also capable of transmitting various information involved in the production of a printed product to the management server 10, the production terminal 70, and external equipment.

For example, the printing and other related equipment 50 operates itself on the basis of control information transmitted from the production terminal 70 and information entered directly into itself. The printing and other related equipment 50 also acquires its own operating status and the like as apparatus information, and transmits the apparatus to the management server 10. Note that details regarding the configuration of, and processing by, the printing and other related equipment 50 will be described later.

### (Production terminal 70)

The production terminal 70 is an information processing apparatus operated by a production manager involved in the production of a printed product to manage processes involved in the production of a printed product, and is configured as a personal computer, a tablet, a smartphone, or the like. The production terminal 70 is capable of executing an application program that makes the information processing system 1 available for use. The production terminal 70 is capable of acquiring various information transmitted from the management server 10, the sales terminal 30, the printing and other related equipment 50, and external equipment, and performing various kinds of processing. The production terminal 70 is also capable of transmitting various information to the management server 10, the sales terminal 30, the printing and other related equipment 50, and external equipment.

For example, the production terminal 70 displays the process management screen generated by the management server 10 on a display of a display unit or the like. The process management screen displayed on a display or the like reflects the finalized information and the unfinalized information. On the process management screen, the finalized information and the unfinalized information are displayed with a distinguishable appearance for each process.

As another example, the production terminal 70 accepts an operation for entering production manager information and transmits the entered production manager information to the management server 10. As another example, the production terminal 70 accepts an operation for entering consumables information and transmits the entered consumables information to the management server 10.

As another example, the production terminal 70 outputs a display indicating a warning, a warning sound, speech expressing a warning, or the like according to the degree of impact due to the specifications not being finalized. Note that details regarding the configuration of, and processing by, the production terminal 70 will be described later.

The configuration of the information processing system 1 described above is an example, and functions for achieving the above processing may simply be provided in the information processing system 1 as a whole. Consequently, some or all of the functions for achieving the above processing may be allocated or achieved cooperatively within the information processing system 1. That is, some or all of the functions of the management server 10 included in the information processing system 1 may also be functions of another information processing apparatus, and some or all of the functions of another information processing apparatus may also be functions of the management server 10. Moreover, some or all of the functions of each of the information processing apparatus, such as the management server 10, included in the information processing system 1 may also be delegated to another server or the like not illustrated. This arrangement makes it possible to accelerate processing by the information processing system 1 as a whole and also cause processes to complement one another.

### <Hardware configuration>

### (Hardware configuration of management server)

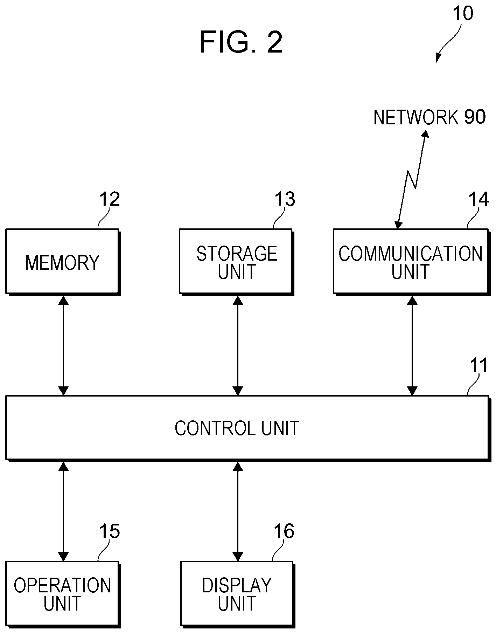

Fig. 2 is a diagram illustrating an example of the hardware configuration of the management server 10 included in the information processing system 1 in Fig. 1. The management server 10 includes a control unit 11, a memory 12, a storage unit 13, a communication unit 14, an operation unit 15, and a display unit 16. These units are connected by a data bus, an address bus, a Peripheral Component Interconnect (PCI) bus, and the like.

The control unit 11 is a processor that controls the functions of the management server 10 through the execution of various software such as an operating system (OS; basic software) and application software. The control unit 11 includes a central processing unit (CPU), for example. The memory 12 is a storage area storing various software, data used in the execution of the software, and the like, and is also used as a work area when performing computations. The memory 12 includes random access memory (RAM), for example.

The storage unit 13 is a storage area that stores information such as input data for various software and output data from various software. The storage unit 13 includes a device such as a hard disk drive (HDD), a solid-state drive (SSD), or a semiconductor memory used to store programs and various settings data, for example. The storage unit 13 is provided with a database for storing various information. For example, the storage unit 13 is provided with a database storing information pertaining the specifications of printed products, a database storing received order information, and a database storing finalized information out of information pertaining to the specifications of a printed product to be produced. The storage unit 13 is also provided with a database storing unfinalized information out of information pertaining to the specifications of a printed product to be produced, a database storing apparatus information, a database storing production manager information, and the like.

The communication unit 14 transmits and receives data with the sales terminal 30, the printing and other related equipment 50, the production terminal 70, and external equipment over the network 90. The operation unit 15 includes, for example, a software keyboard or mechanical buttons, switches, and the like, and accepts input operations. The operation unit 15 also includes a touch sensor that is integrated with the display unit 16 to form a touch panel. The display unit 16 includes a liquid crystal display (LCD), an organic light-emitting diode (OLED) display, or the like used to display information, and displays images, text data, and the like on a screen. For example, the display unit 16 displays icons formed from images and text in a display area.

### (Hardware configuration of sales terminal 30, printing and other related equipment 50, and production terminal 70)

The sales terminal 30, the printing and other related equipment 50, and the production terminal 70 may each be provided with a hardware configuration similar to the hardware configuration of the management server 10 illustrated in Fig. 2. That is, the sales terminal 30, the printing and other related equipment 50, and the production terminal 70 may be provided with a control unit, a memory, a storage unit, a communication unit, an operation unit, and a display unit, each of which has functions similar to the corresponding one of the control unit 11 through the display unit 16 in Fig. 2. For this reason, illustration and description of the hardware configuration of the sales terminal 30, the printing and other related equipment 50, and the production terminal 70 are omitted.

### <Functional configuration>

### (Functional configuration of control unit 11 in management server 10)

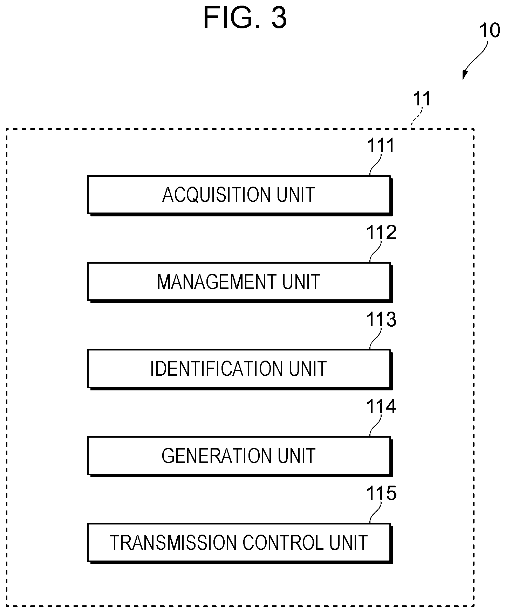

Fig. 3 is a diagram illustrating an example of a functional configuration of the control unit 11 in the user terminal 10. In the control unit 11 of the management server 10, an acquisition unit 111, a management unit 112, an identification unit 113, a generation unit 114, and a transmission control unit 115 function.

The acquisition unit 111 acquires various information. For example, the acquisition unit 111 acquires various information transmitted from each of the sales terminal 30, the printing and other related equipment 50, and the production terminal 70. Examples of information transmitted from the sales terminal 30 include received order information, finalized information and unfinalized information as information pertaining to specifications, and the like. Examples of information transmitted from the printing and other related equipment 50 include apparatus information and the like. Examples of information transmitted from the production terminal 70 include production manager information, consumables information, and the like.

The management unit 112 stores and manages various information in a database of the storage unit 13 (see Fig. 2). For example, the management unit 112 stores and manages each of information pertaining to the specifications of a printed product, received order information, finalized information, unfinalized information, apparatus information, production manager information, and consumables information in a corresponding database.

The identification unit 113 performs identification based on various acquired and managed information. For example, the identification unit 113 identifies, for each process, the current status of specifications that are not finalized, on the basis of received order information, information pertaining to specifications, apparatus information, production manager information, and consumables information stored and managed in a database. As another example, the identification unit 113 identifies, for each process, the impact due to specifications not being finalized on the basis of received order information, information pertaining to specifications, apparatus information, production manager information, and consumables information. Furthermore, the identification unit 113 identifies the degree of impact due to the specifications not being finalized.

As another example, the identification unit 113 identifies the current status of received order information on the basis of received order information. As another example, the identification unit 113 identifies the current status of consumables information on the basis of consumables information. As another example, the identification unit 113 identifies the current status of production manager information on the basis of production manager information. For example, the identification unit 113 identifies the current status of production manager information on the basis of production manager information. As another example, the identification unit 113 identifies a status indicating the current status of steps up to finalizing the specifications of a printed product, on the basis of received order information, information pertaining to specifications, apparatus information, production manager information, and consumables information.

The generation unit 114 generates a process management screen. Specifically, the generation unit 114 generates a process management screen to be displayed on the display unit of each of the sales terminal 30 and the production terminal 70, on the basis of various information identified by the identification unit 113. Note that specific examples of the process management screen generated by the generation unit 114 will be described later with reference to Figs. 10 to 16.

The transmission control unit 115 controls the transmission of various information through the communication unit 14 (see Fig. 2). Specifically, the transmission control unit 115 controls the transmission of various information to each of the sales terminal 30, the printing and other related equipment 50, and the production terminal 70. For example, the transmission control unit 115 controls the transmission of control information for displaying a generated process management screen to each of the sales terminal 30 and the production terminal 70. As another example, the transmission control unit 115 controls the transmission of control information for outputting a predetermined warning to each of the sales terminal 30 and the production terminal 70.

### <Specific examples>

### (Specific example of specifications of printed product)

Fig. 4 is a diagram illustrating a specific example of the specifications of a printed product to be produced by the printing and other related equipment 50 included in the information processing system 1 in Fig. 1. Fig. 4 illustrates a specific example of information pertaining to the specifications of a printed product, the information being stored and managed in a database. As illustrated in Fig. 4, information pertaining to the specifications of a printed product is managed by being categorized into a major category "Specifications category (1)", a middle category "Specifications category (2)", and a minor category "Specifications category (3)".

"Specifications category (1)" includes, "design", "size", "paper", "color mode", "printing method", "finishing/processing", "quantity", "deadline", "budget", and "receiving method". Within "Specifications category (1)", such as within "design" for example, "Specifications category (2)" includes "manuscript", "parts", "design", "proofing", and "direction". Further, within "Specifications category (2), such as within "design" for example, "Specifications category (3)" includes "background", "text", "image", "illustration", "graph", and "table". Note that other specific examples of "Specifications category (2)" and "Specifications category (3)" are as illustrated in Fig. 4.

### (Specific example of processes involved in production of printed product)

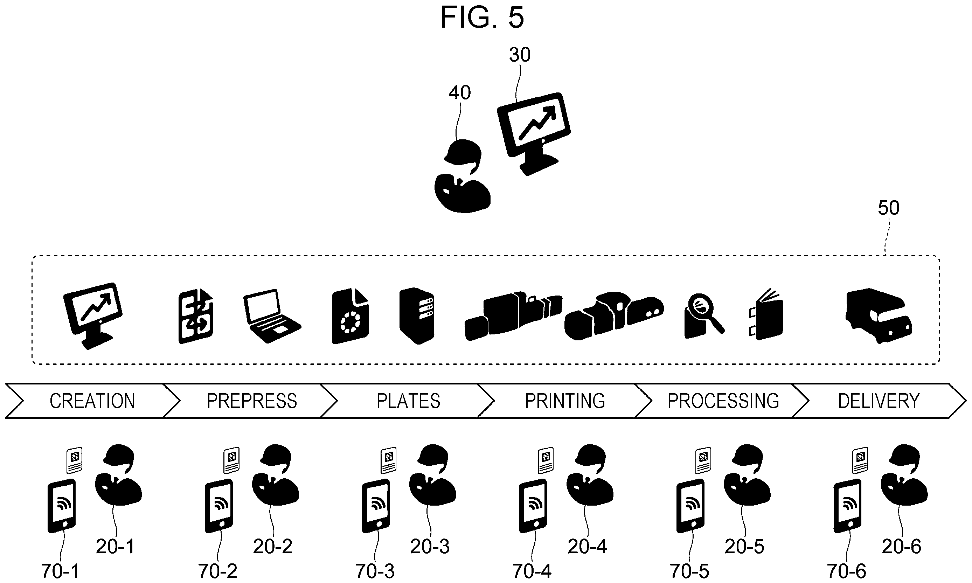

Fig. 5 is a diagram illustrating a specific example of processes involved in the production of a printed product. Fig. 5 illustrates the six processes of "creation", "prepress", "plates", "printing", "processing", and "shipment" as processes involved in the production of a printed product, the processes proceeding in the above order. Fig. 5 also illustrates production managers 20-1 through 20-6 in charge of each process, and production terminals 70-1 through 70-6, each of which is operated by a corresponding one of the production managers 20-1 through 20-6. Note that although six processes are illustrated in Fig. 5, this is merely an example, and the number of processes may also be less than six or more than six.

Fig. 5 also illustrates the printing and other related equipment 50 operated by each of the production managers 20-1 through 20-6, a sales representative 40 who does the work of receiving orders for printed products to be produced by the printing and other related equipment 50, and the sales terminal 30 operated by the sales representative 40. Note that the sales terminal 30, the printing and other related equipment 50, and the production terminals 70-1 through 70-6 are connected to the management server 10 over the network 90 not illustrated here (see Fig. 1).

### (Specific example of statuses indicating current status of steps up to finalizing specifications of printed product)

Fig. 6 is a diagram illustrating a specific example of statuses indicating the current status of steps up to finalizing "manuscript" out of the specifications of a printed product to be produced. Fig. 6 illustrates a specific example of statuses indicating the current status of steps up to finalizing "manuscript" out of the specifications of a printed product to be produced. As illustrated in Fig. 4 described above, "manuscript" out of the specifications of a printed product refers to the specifications categorized into "Specifications category (2)" under "design" of "Specifications category (1)". Fig. 6 illustrates the eight statuses "manuscript writing", "submission", "first proof", "return of first proof", "second proof", "return of second proof", "foundry proof", and "proofing complete/printing complete" as statuses indicating the current status of steps up to finalizing "manuscript" out of the specifications of a printed product.

Among the eight statuses illustrated in Fig. 6, in "submission", the manuscript is handed over. In "first proof", a review is performed by trial printing for initial review. In "return of first proof", instructions for revising the first proof are given. In "second proof", the corrected first proof is printed. In "return of second proof", instructions for revising the second proof are given. "Second proof" and "return of second proof" may be repeated multiple times (such as three or four times, for example). In "foundry proof", proofing is performed one last time to be sure. In "proofing complete/printing complete", no revisions are required or any revisions have been applied, and thus resubmission is not necessary.

As illustrated in Fig. 6, until the steps have gone through the eight statuses, "manuscript" out of the specifications of the printed product to be produced is managed as the "unfinalized" state. That is, "manuscript" is managed as "unfinalized information" pertaining to specifications that are not finalized. In contrast, once the steps have gone through the eight statuses, "manuscript" out of the specifications of the printed product to be produced is managed as the "finalized" state. That is, "manuscript" is managed as "finalized information" pertaining to specifications that are finalized. Note that although six statuses are illustrated in Fig. 5, this is merely an example, and the number of statuses may also be less than six or more than six.

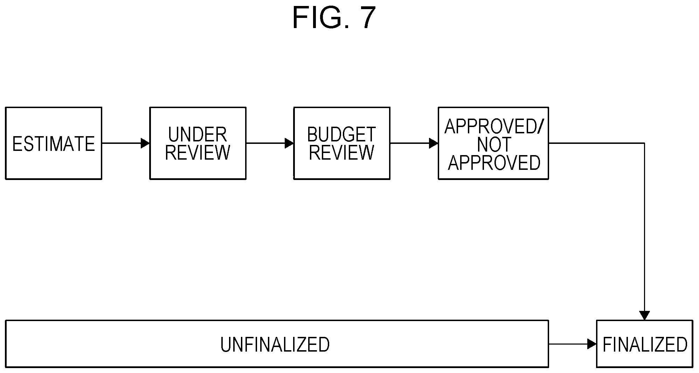

Fig. 7 is a diagram illustrating a specific example of statuses indicating the current status of steps up to finalizing "number of copies (quantity)" out of the specifications of a printed product to be produced. Fig. 7 illustrates a specific example of statuses indicating the current status of steps up to finalizing "number of copies (quantity)" out of the specifications of a printed product to be produced. As illustrated in Fig. 4 described above, "number of copies (quantity)" out of the specifications of a printed product refers to the specifications categorized into "Specifications category (2)" under "quantity" of "Specifications category (1)". Fig. 7 illustrates the four statuses "estimate", "under review", "budget review", "approved/not approved" as statuses indicating the current status of steps up to finalizing "number of copies (quantity)" out of the specifications of a printed product.

Among the four statuses illustrated in Fig. 7, in "estimate", the estimated number of copies (quantity) to produce at the time of receiving the order is entered. In "under review", a suitable value for the number of copies (quantity) is reviewed. In "budget review", a budget is submitted for approval. In "approved/not approved", an approval decision is made.

As illustrated in Fig. 7, until the steps have gone through the four statuses, "number of copies (quantity)" out of the specifications of the printed product to be produced is managed as the "unfinalized" state. That is, "number of copies (quantity)" is managed as "unfinalized information" pertaining to specifications that are not finalized. In contrast, once the steps have gone through the four statuses, "number of copies (quantity)" out of the specifications of the printed product to be produced is managed as the "finalized" state. That is, "number of copies (quantity)" is managed as "finalized information" pertaining to specifications that are finalized. Note that although four statuses are illustrated in Fig. 7, this is merely an example, and the number of statuses may also be less than four or more than four.

### (Specific example of relationship between order-placing side and order-receiving side for printed product)

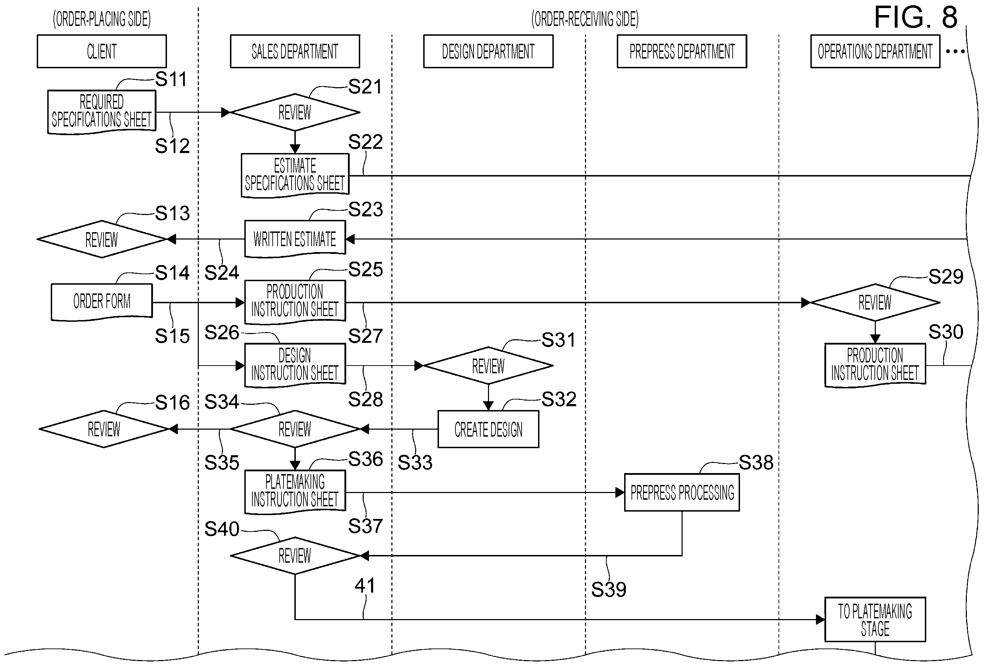

Fig. 8 is a flowchart illustrating a specific example of the relationship between the order-placing side and the order-receiving side for a printed product. As illustrated in Fig. 8, the order-placing side for printed product, or in other words the client, creates a "required specifications sheet" describing the specifications of the desired printed product to be produced (step 11), and presents the "required specifications sheet" to a sales representative in the sales department on the order-receiving side (step 12). The sales representative reviews the content of the presented "required specifications sheet" (step 21) and deploys an "estimate specifications sheet" for creating a written estimate to each department involved (design department, prepress department, operations department, and the like) (step 22). Thereafter, the sales representative creates a "written estimate" based on the response from each department involved (step 23), and presents the "written estimate" to the client (step 24).

The client reviews the content of the presented "written estimate" (step 13), creates an "order form" (step 14), and presents the "order form" to the sales representative in the sales department on the order-receiving side (step 15). On the basis of the presented "order form", the sales representative creates a "production instruction sheet" for issuing instructions regarding the production of the printed product for which an order has been placed and a "design instruction sheet" for issuing instructions regarding the design of the printed product for which an order has been placed (steps 25, 26). The sales representative then presents the created "production instruction sheet" and "design instruction sheet" to the operations department and the design department, respectively (steps 27, 28).

The operations department, having been presented with the "production instruction sheet", reviews the content of the presented "production instruction sheet" (step 29) and issues production instructions based on the "production instruction sheet" (step 30). The design department, having been presented with the "design instruction sheet", reviews the content of the presented "design instruction sheet" (step 31) and creates a design based on the "design instruction sheet" (step 32). The design department also presents the created design to the sales department (step 33). The sales representative in the sales department reviews the presented design (step 34) and presents the design to the client (step 35). The client, having been presented with the design, reviews the content of the design (step 16). Step 34, step 35, and step 16 are steps for finalizing "manuscript" out of the specifications of the printed product to be produced, and are the steps that contain the eight statuses illustrated in Fig. 6 described above.

On the basis of the design that has finished being reviewed by the client, the sales representative in the sales department creates a "platemaking instruction sheet" for creating plates to be used in offset printing (step 36), and presents the "platemaking instruction sheet" to the prepress department (step 37). The prepress department creates print data by performing prepress processing based on the presented "platemaking instruction sheet" (step 38), and presents the data to the sales department (step 39). In the sales department presented with the print data from the prepress department, the sales representative reviews the content (step 40) and presents the print data to the operations department to move to the platemaking stage (step 41).

### (Specific example of a method for managing current status of specifications of printed product)

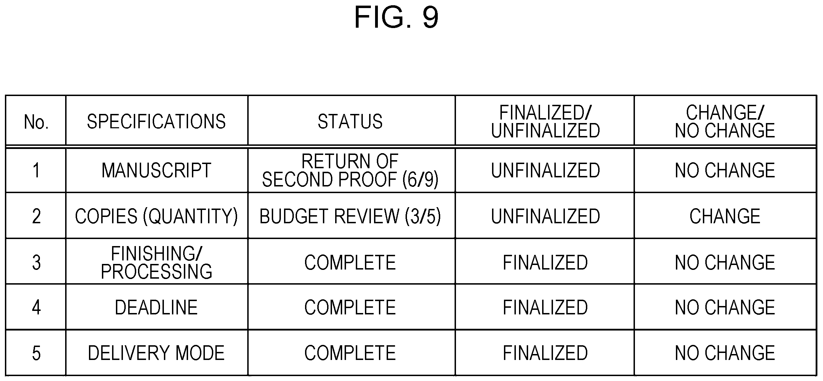

Fig. 9 is a diagram illustrating a specific example of a method for managing the current status of steps up to finalizing the specifications of a printed product to be produced. Fig. 9 illustrates a specific example of a table (hereinafter referred to as the "specifications management table") enabling management of the current status of steps up to finalizing the specifications of a printed product to be produced. In the specifications management table, the current status of "status", "finalized/unfinalized", and "change/no change" is managed for each of the "specifications" of a printed product.

For example, the current status of "manuscript" out of the "specifications" of the printed product is managed such that "status" is "return of second proof (6/9)", "finalized/unfinalized" is "unfinalized", and "change/no change" is "no change". That is, "status" is "return of second proof" (see Fig. 6), which more specifically indicates that the sixth stage out of nine stages has been reached. Since "status" is still "return of second proof", "finalized/unfinalized" indicates the "unfinalized state" in which the specifications are not finalized. "Change/no change" indicates "no change", which means that there is no possibility of the specifications being changed.

As another example, the current status of "number of copies (quantity)" out of the "specifications" of the printed product is managed such that "status" is "budget review (3/5)", "finalized/unfinalized" is "unfinalized", and "change/no change" is "change". That is, "status" is "budget review" (see Fig. 7), which more specifically indicates that the third stage out of five stages has been reached (for example, out of five people who review the budget, three people have finished reviewing). Since "status" is still "budget review", "finalized/unfinalized" indicates the "unfinalized state" in which the specifications are not finalized. "Change/no change" indicates "change", which means that there is a possibility of the specifications being changed. That is, this indicates the possibility that the number of copies (quantity) may be changed in the future.

As another example, the current status of each of "finishing/processing", "deadline", and "delivery mode" out of the "specifications" of the printed product is managed such that "status" is "complete", "finalized/unfinalized" is "finalized", and "change/no change" is "no change". That is, this indicates that these specifications are finalized, and are managed as finalized information with no possibility of being changed in the future.

### (Specific examples of warning)

Figs. 10A and 10B are diagrams illustrating specific examples of a warning outputted according to the degree of impact due to the specifications of a printed product not being finalized. For example, if a production plan for a printed product has already been proposed, a warning may be displayed in accordance with a scheduled production start time for each process. As a specific example, Fig. 10A illustrates an example in which the appearance of a display indicating a process on the process management screen changes according to the time remaining until the scheduled production start time for each process.

The example illustrated in Fig. 10A is divided into four stages from the appearance of a display indicating the lowest warning level to the appearance of a display indicating the highest warning level. For example, when the time remaining until the scheduled production start time for each process is "3 days", the appearance changes to the appearance of the display indicating the lowest warning level. When the time remaining until the scheduled production start time for each process is " 1 day", the appearance changes to the appearance of the display indicating the second-lowest warning level. When the time remaining until the scheduled production start time for each process is "half a day", the appearance changes to the appearance of the display indicating the second-highest warning level. When the time remaining until the scheduled production start time for each process is "30 minutes", the appearance changes to the appearance of the display indicating the highest warning level.

Fig. 10B illustrates an example in which the differences in warning color expression according to the time remaining until the scheduled production start time illustrated by way of example in Fig. 10A described above are applied to the statuses indicating the current status of steps up to finalizing the specifications of a printed product. In the example illustrated in Fig. 10B, the four statuses "first proof/return of first proof", "second proof/return of second proof", "foundry proof", and "proofing complete/printing complete" are indicated as statuses indicating the current status of steps up to finalizing "manuscript" out of the specifications of a printed product.

For example, when the time remaining until the scheduled production start time is "3 days", the appearance of the display of the four statuses "first proof/return of first proof", "second proof/return of second proof", "foundry proof", and "proofing complete/printing complete" all change to the appearance of the display indicating the lowest warning level. As another example, when the time remaining until the scheduled production start time is "1 day", the appearance of the display of "first proof/return of first proof" changes to the appearance of the display indicating the second-lowest warning level. On the other hand, the appearance of the display of "second proof/return of second proof", "foundry proof", and "proofing complete/printing complete" remains the appearance of the display indicating the lowest warning level.

As another example, when the time remaining until the scheduled production start time is "half a day", the appearance of the display of "first proof/return of first proof" changes to the appearance of the display indicating the highest warning level. Also, the appearance of the display of "second proof/return of second proof" changes to the appearance of the display indicating the second-highest warning level. On the other hand, the appearance of the display of "foundry proof" and "proofing complete/printing complete" remains the appearance of the display indicating the lowest warning level.

As another example, when the time remaining until the scheduled production start time is "half a day", the appearance of the display of "first proof/return of first proof" changes to the appearance of the display indicating the highest warning level. Also, the appearance of the display of "foundry proof" changes to the appearance of the display indicating the second-highest warning level. On the other hand, the appearance of the display of "proofing complete/printing complete" remains the appearance of the display indicating the lowest warning level.

### (Specific example of finalized information and unfinalized information displayed with a distinguishable appearance)

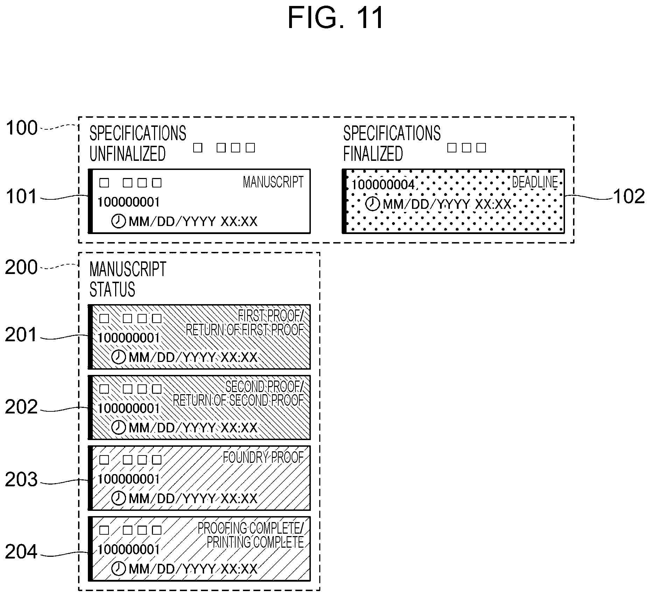

Fig. 11 is a diagram illustrating a specific example of finalized information and unfinalized information displayed with a distinguishable appearance on the process management screen. In the area enclosed by the dashed line 100 on the process management screen, an icon 101 indicating "manuscript" as unfinalized information and an icon 102 indicating "deadline" as finalized information, are displayed with a distinguishable appearance as an example of the specifications of a printed product. Specifically, the color of the icon 101 indicating "manuscript" as unfinalized information is set to transparent (that is, no color) and the color of the icon 102 indicating "deadline" as finalized information is set to non-transparent (that is, with color).

Also, in the area enclosed by the dashed line 200 below the icon 101 indicating "manuscript" as unfinalized information, icons 201 through 204 indicating statuses indicating the current status of steps up to finalizing "manuscript" as unfinalized information are displayed. Specifically, an icon 201 indicating "first proof/return of first proof", an icon 202 indicating "second proof/return of second proof", an icon 203 indicating "foundry proof", and an icon 204 indicating "proofing complete/printing complete" are displayed.

At this point, assume that the appearance of the display in Fig. 10B described above is applied to the icons 201 through 204 illustrated in Fig. 11 and the time remaining until the scheduled production start time is "30 minutes". In this case, as illustrated in Fig. 11, the appearance of the display of the icon 201 indicating "first proof/return of first proof" and the icon 202 indicating "second proof/return of second proof" changes to the appearance of the display indicating the highest warning level. Also, the appearance of the display of the icon 203 indicating "foundry proof" changes to the appearance of the display indicating the second-lowest warning level. Also, the appearance of the display of the icon 204 indicating "proofing complete/printing complete" changes to the appearance of the display indicating the lowest warning level.

### (Specific example of information pertaining to impact due to specifications not being finalized)

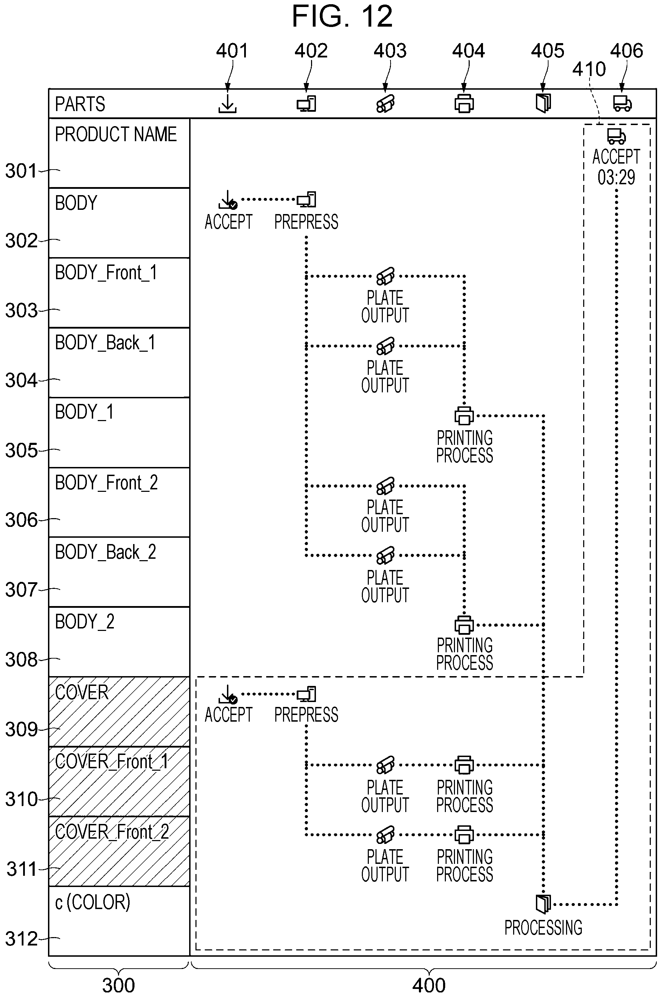

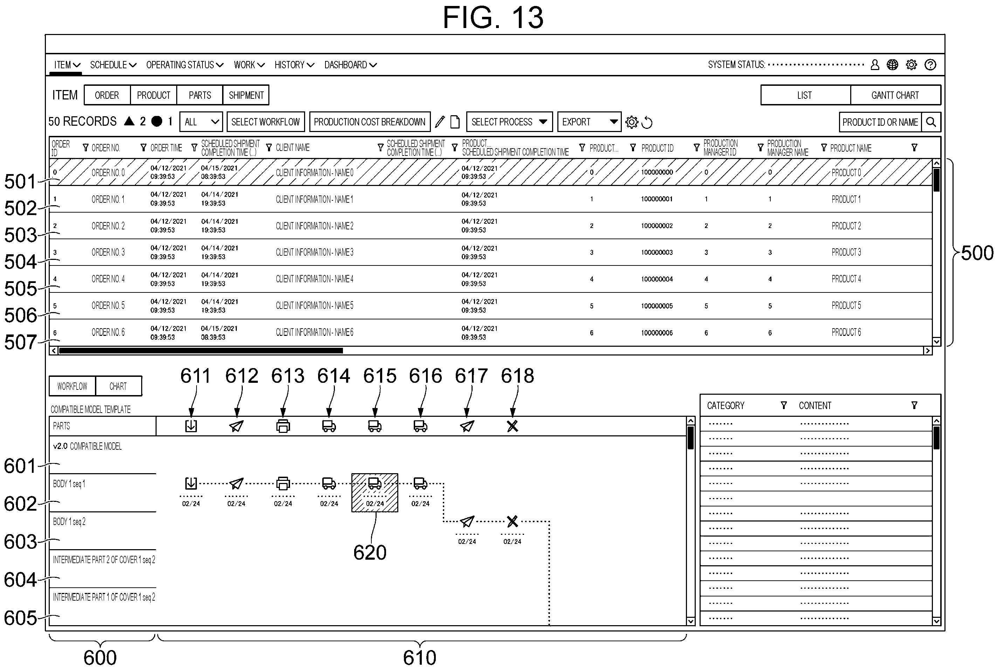

Figs. 12 and 13 are diagrams illustrating specific examples of a workflow out of a process management screen. On the process management screen, for example, a workflow for producing a printed product is displayed as illustrated in each of Figs. 12 and 13. A workflow may be a visualization of correspondence relationships between different parts groups and processes for each type of printed product to be produced, a visualization of correspondence relationships among a list of one or more printed products to be produced, parts groups, and processes, or the like.

Fig. 12 illustrates a specific example of a workflow visualizing correspondence relationships between different parts groups and processes for each type of printed product to be produced. Note that in the workflow illustrated in Fig. 12, the printed product is assumed to be a "bound book". In the area 300 on the left side of the workflow illustrated in Fig. 12, icons 301 through 312 respectively indicating parts of a bound book to be produced are displayed in a vertical list. Also, in the area 400 on the right side of the workflow, icons 401 through 406 respectively indicating processes are displayed in a time series. Note that the area 400 is displayed under the assumption that time flows horizontally from left to right.

As an example, suppose that the specifications of the manuscript for the "cover" of the bound book to be produced are unfinalized. In this case, in the area 300, the icons 309 through 311 respectively indicating "Cover", "Cover_Front_1", and "Cover_Front_2", which are the parts related to the "cover" from among the parts of the bound book, are displayed with a distinguishable appearance. Note that in the example in Fig. 12, the icons 309 through 311 are made distinguishable through the application of color. Furthermore, in the area 400, the area within the dashed line 410 enclosing processes that are impacted because the specifications of the manuscript for the "cover" are not finalized is displayed.

In this case, processes not enclosed by the dashed line 410 are not particularly impacted even if the specifications of the manuscript for the "cover" are unfinalized, and thus production may be started for these processes. In contrast, production may not be started for processes included in the area enclosed by the dashed line 410. The production manager looks at the workflow illustrated in Fig. 12 to review while distinguishing between the processes for which production may not be started because the specifications of the manuscript for the "cover" are not finalized and the processes for which production may be started even if the specifications of the manuscript for the "cover" are unfinalized.

Fig. 13 illustrates a specific example of a workflow visualizing correspondence relationships among a list of multiple printed products to be produced, parts groups, and processes. Note that in the workflow illustrated in Fig. 13, it is assumed that orders have been received for seven or more types of printed products, and the processes for these printed products are being managed. In the area 500 on the upper side of the workflow illustrated in Fig. 13, information about each of the printed products 501 through 507 to be produced is listed. In the area 600 on the left edge of the lower side of the workflow, icons 601 through 605 respectively indicating parts of a printed product to be produced are displayed in a vertical list. Also, in the area 610 in the central part of the lower side of the workflow, icons 611 through 618 respectively indicating processes are displayed in a time series. Note that the area 610 is displayed under the assumption that time flows horizontally from left to right.

As an example, suppose that an operation has been performed to select the printed product 501 from among the printed products 501 through 507 listed in the area 500. Subsequently, as illustrated in Fig. 13, the appearance of the display of the entire area indicating information about the selected printed product 501 changes. Note that in the example in Fig. 13, the entire area indicating information about the printed product 501 is made distinguishable through the application of color. Also, processes involved in the production of the printed product 501 selected in the area 500 are visualized in the area 610. At this time, if the specifications of the selected printed product 501 are not finalized, the icon indicating a process that is impacted due to the specifications not being finalized is displayed with a distinguishable appearance. Note that in the example in Fig. 13, the icon 620 indicating a process that is impacted due to the specifications not being finalized is made distinguishable through the application of color.

In this case, processes without color applied to the icon are not particularly impacted even if the specifications of the selected printed product 501 are not finalized, and thus production may be started for these processes. In contrast, production may not be started for the process corresponding to the icon 620. The production manager looks at the workflow illustrated in Fig. 13 to review relationships between successive processes while distinguishing between the processes for which production may not be started because some of the specifications of the printed product 501 are not finalized and the processes for which production may be started even if some of the specifications of the printed product 501 are unfinalized. Note that, although not illustrated, icons indicating parts for which the specifications are not finalized are likewise made distinguishable through the application of color in the example in Fig. 13, in a similar manner to the example in Fig. 12 described above.

### (Specific example of schedule management screen)

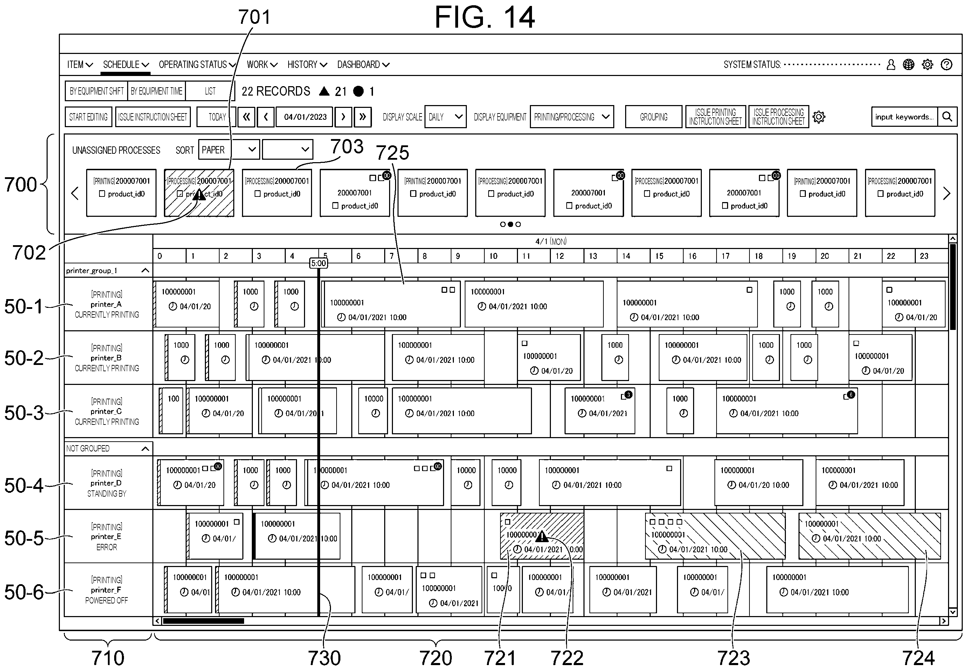

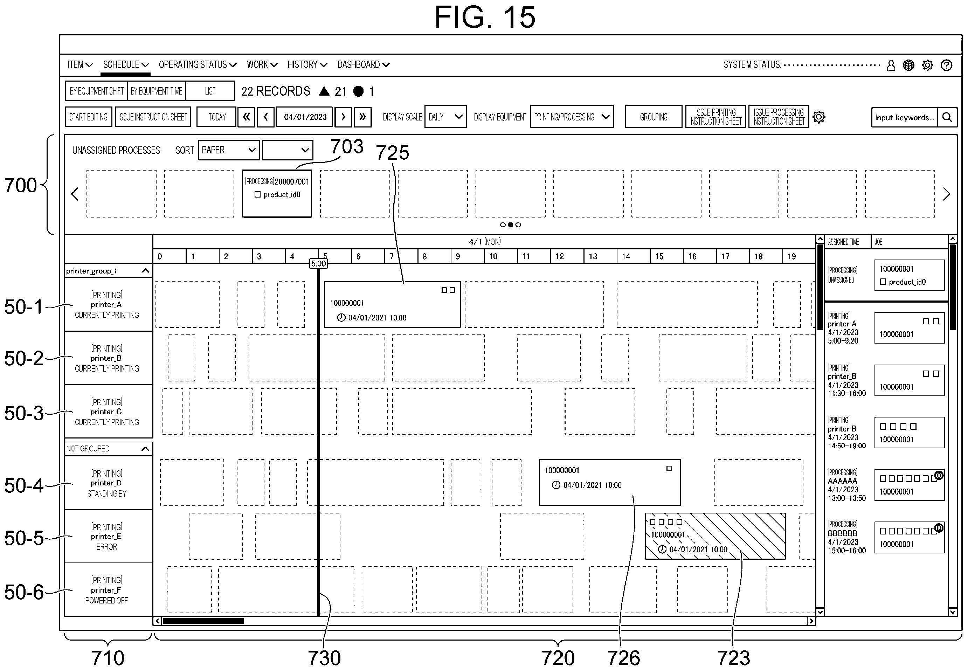

Figs. 14 and 15 are diagrams illustrating specific examples of a schedule management screen out of the process management screen. The process management screen includes a schedule management screen for the printing and other related equipment 50, as illustrated in Fig. 14, for example. In the area 700 on the upper side of the schedule management screen illustrated in Fig. 14, icons respectively indicating multiple printed products to be produced are displayed in a horizontal list. In the area 710 on the left edge of the lower side of the schedule management screen, icons respectively indicating printing and other related equipment 50-1 through 50-6 are displayed in a vertical list. Furthermore, in the area 720 to the right thereof, a schedule pertaining to the operation of each of the printing and other related equipment 50-1 through 50-6 is displayed in a time series. Note that the area 720 is displayed under the assumption that time flows horizontally from left to right, with a vertically extending solid line 730 indicating the current time.

The multiple bars illustrated in the area 720 represent individual jobs to be executed by each of the printing and other related equipment 50-1 through 50-6. The horizontal length of each of the multiple bars representing jobs represents the operating time of each of the printing and other related equipment 50-1 through 50-6. Also, in each of the multiple bars representing jobs, information such as a number (for example, an ID) that can be used to uniquely identify the printed product to be produced and the scheduled production start time, for example, is written as the content of each job.

As an example, suppose that the scheduled production start time for the printing and other related equipment 50-5 is impacted because some of the specifications of a printed product to be produced are not finalized. In this case, the icon indicating the printed product of which some of the specifications are not finalized is displayed with a distinguishable appearance among the icons respectively indicating the multiple printed products displayed in the area 700. Note that in the example in Fig. 14, the icon 701 indicating the printed product of which some of the specifications are not finalized is made distinguishable through the addition of a mark 702 indicating a warning.

In the area 720, the bars representing jobs for which production may not be started at the scheduled production start time because some of the specifications are not finalized and the bars representing jobs involved in the production of other printed products that are impacted thereby are displayed with an appearance distinguishable from the bars representing other jobs. Note that in the example in Fig. 14, color is applied and a mark 722 indicating a warning is further added to the bar 721 representing a job for which production may not be started at the scheduled production start time because the specifications are not finalized. Color is also applied to the bars 723 and 724 representing jobs involved in the production of other printed products that are impacted due to the specifications not being finalized, thereby making these bars distinguishable.

If an operation is performed to select the icon indicating one printed product from among the icons respectively indicating the multiple printed products displayed on the schedule management screen in Fig. 14, the bars representing jobs by the printing and other related equipment 50 to be operated to produce that printed product are extracted and displayed. Specifically, as illustrated in Fig. 15, bars other than the bars representing the extracted jobs are hidden. Fig. 15 illustrates a specific example of bars representing jobs that are displayed (that is, remain without being hidden) when an operation is performed to select the icon indicating one printed product.

In the area 700 on the upper side of the schedule management screen illustrated in Fig. 15, an icon 703 indicating the one printed product is displayed. The icon 703 is the icon 703 indicating the one printed product selected by the production manager from among the icons respectively indicating multiple printed products that are displayed in the area 700 on the upper side of the schedule management screen illustrated in Fig. 14 described above. Also, in the area 710 on the lower side of the schedule management screen illustrated in Fig. 15, the bars 725, 726, and 723 representing jobs by, respectively, the printing and other related equipment 50-1, 50-4, and 50-5 to be operated to produce the selected one printed product are displayed.

In this case, from among the bars 725, 726, and 723 representing jobs by the printing and other related equipment 50-1, 50-4, and 50-5, respectively, color is applied to the bar 723 representing the job by the printing and other related equipment 50-5. This indicates that the job is impacted because the specifications of another printed product are not finalized, as described above with reference to Fig. 14. The production manager looks at the schedule management screen illustrated in Fig. 15 to display and review, for each printed product, the bars representing jobs that are impacted because the specifications of another printed product are not finalized.

Note that Figs. 14 and 15 are used to describe examples of displaying bars representing jobs by the printing and other related equipment 50 to be operated to produce one printed product selected from among multiple printed products, but the configuration is not limited thereto. For example, bars representing jobs by the printing and other related equipment 50 to be operated to produce of each multiple selected printed products may also be displayed.

### (Specific example of management of printed products)

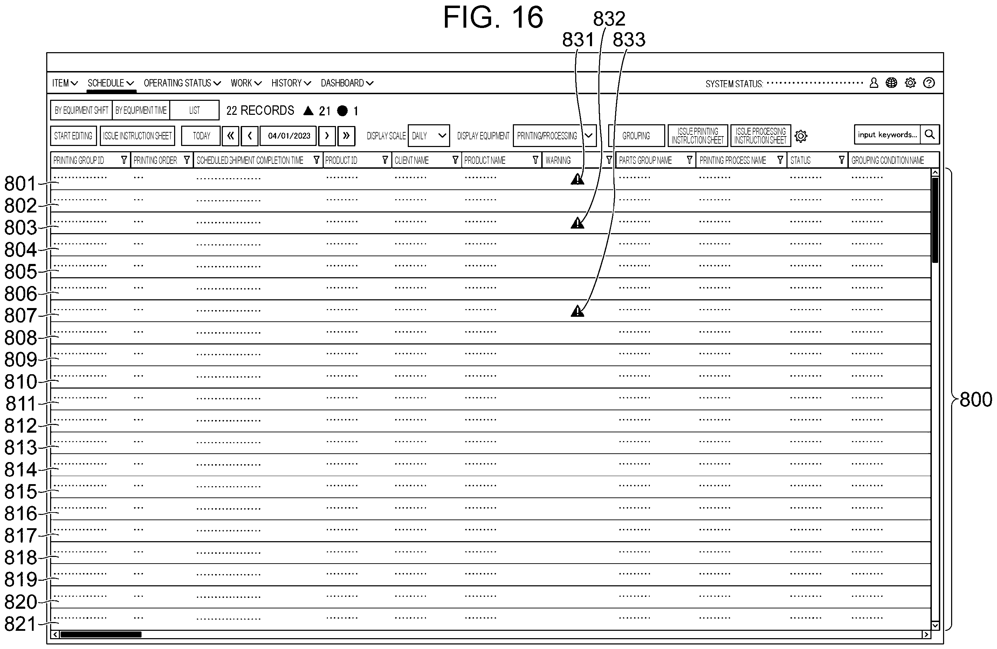

Fig. 16 is a diagram illustrating a specific example of a product list screen out of a process management screen. The process management screen includes a product list screen displaying printed products in a vertical list, as illustrated in Fig. 16, for example. In the area 800 of the product list screen, each individual row indicates one printed product, and various information is associated with each printed product. For example, on the product list screen illustrated in Fig. 16, a printing group ID, printing order, schedule shipment completion time, product ID, client name, product name, warning, parts group name, printing process name, status, and grouping condition name are associated with each of printed products 801 through 821.

Among the information associated with each printed product, "warning" is information indicating that the product is impacted because the specifications of another printed product are not finalized. A mark indicating the warning is added to the affected printed product. Note that in the example in Fig. 16, marks 831 through 833 indicating a warning are added to the printed products 801, 803, and 807, respectively. The production manager looks at the product list screen illustrated in Fig. 16 to confirm that the printed products 801, 803, and 807 are products impacted because the specifications of another printed product are not finalized.

### <Other exemplary embodiments>

The foregoing describes an exemplary embodiment of the present disclosure, but the present disclosure is not limited to the exemplary embodiment described above. Moreover, the effects produced by an exemplary embodiment of the present disclosure are not limited to those indicated in relation to the exemplary embodiment described above. For example, the configuration of the information processing system 1 illustrated in Fig. 1 and the hardware configuration of the management server 10 illustrated in Fig. 2 are both merely illustrative examples for achieving an objective of the present disclosure and are not particularly limiting. Likewise, the functional configuration of the management server 10 illustrated in Fig. 3 is merely an illustrative example and is not particularly limiting. Insofar as functionality for executing the processing described above as a whole is provided in the information processing system 1 of Fig. 1, the functional configuration to be used for achieving the functionality is not limited to the example in Fig. 3. Moreover, the specific examples illustrated in each of Figs. 4 through 16 are also merely examples and are not particularly limiting. The present disclosure is also applicable to a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### (Appendix)

(((1))) An information processing system comprising:
   one or more processors configured to:
   acquire, as information pertaining to specifications of a printed product to be produced, finalized information pertaining to specifications that are finalized and unfinalized information pertaining to specifications that are not finalized; and
   display, on a screen for managing processes involved in the production of the printed product, the finalized information and the unfinalized information with a distinguishable appearance for each process.
(((2))) The information processing system according to (((1))), wherein the one or more processors are configured to display, as the unfinalized information, a current status of the specifications that are not finalized.
(((3))) The information processing system according to (((2))), wherein the one or more processors are configured to display a current status of one or more pieces of information from among received order information pertaining to a received order for the printed product, apparatus information pertaining to an apparatus used in the production of the printed product, consumables information pertaining to consumables used by the apparatus, and production manager information pertaining to a person in charge of each of the processes involved in the production of the printed product.
(((4))) The information processing system according to (((2))) or (((3))), wherein the one or more processors are configured to display a current status of steps up to finalizing specifications.
(((5))) The information processing system according to any one of (((2))) to (((4))), wherein the one or more processors are configured to display, in addition to the current status, information pertaining to impact due to specifications not being finalized.
(((6))) The information processing system according to (((5))), wherein the one or more processors are configured to display, as the information pertaining to impact, a process that is impacted from among a plurality of processes for producing the printed product.
(((7))) The information processing system according to (((5))), wherein the one or more processors are configured to display, as the information pertaining to impact, a printed product that is impacted from among a plurality of other printed products different from the printed product.
(((8))) The information processing system according to (((7))), wherein the one or more processors are configured to further display a process that is impacted from among a plurality of processes for producing the printed product that is impacted.
(((9))) The information processing system according to (((8))), wherein the one or more processors are configured to display the finalized information and the unfinalized information with a distinguishable appearance on a terminal operated by a person in charge of the process that is impacted, and not display the finalized information and the unfinalized information with a distinguishable appearance on a terminal operated by a person in charge of a process that is not impacted.
(((10))) The information processing system according to (((5))), wherein the one or more processors are configured to output a predetermined warning according to a degree of the impact.
(((11))) A program causing a computer to execute a process comprising:
   acquiring, as information pertaining to specifications of a printed product to be produced, finalized information pertaining to specifications that are finalized and unfinalized information pertaining to specifications that are not finalized; and
   displaying, on a screen for managing processes involved in the production of the printed product, the finalized information and the unfinalized information with a distinguishable appearance for each process.

According to the aspect of the present disclosure as in (((1))), an order-receiving party is able to decide whether or not to start processes involved in the production of a printed product, even if some of the specifications of the printed product for which an order has been received are not finalized.

According to the aspect of the present disclosure as in (((2))), the order-receiving party is able to decide whether or not to start processes involved in the production of a printed product according to the current status of the specifications that are not finalized.

According to the aspect of the present disclosure as in (((3))), the order-receiving party is able to decide whether or not to start processes involved in the production of a printed product according to the current status of one or more pieces of information from among received order information, apparatus information, consumables information, and production manager information as the current status of the specifications that are not finalized.

According to the aspect of the present disclosure as in (((4))), the order-receiving party is able to decide whether or not to start processes involved in the production of a printed product according to the current status of steps up to finalizing the specifications.

According to the aspect of the present disclosure as in (((5))), the order-receiving party is able to decide whether or not to start processes involved in the production of a printed product.

According to the aspect of the present disclosure as in (((6))), the order-receiving party is able to decide whether or not to start processes involved in the production of a printed product according to a process that is impacted due to the specifications not being finalized.

According to the aspect of the present disclosure as in (((7))), the order-receiving party is able to decide whether or not to start processes involved in the production of a printed product according to another printed product that is impacted due to the specifications not being finalized.

According to the aspect of the present disclosure as in (((8))), the order-receiving party is able to grasp which processes for other printed products are impacted due to the specifications not being finalized.

According to the aspect of the present disclosure as in (((9))), confusion due to the presence of useless information is alleviated.

According to the aspect of the present disclosure as in (((10))), a production manager is able to grasp the degree of impact due to the specifications not being finalized.

According to the aspect of the present disclosure as in (((11))), an order-receiving party is able to decide whether or not to start processes involved in the production of a printed product, even if some of the specifications of the printed product for which an order has been received are not finalized.

## Claims

1. An information processing system comprising:
one or more processors configured to:
acquire, as information pertaining to specifications of a printed product to be produced, finalized information pertaining to specifications that are finalized and unfinalized information pertaining to specifications that are not finalized; and
display, on a screen for managing processes involved in the production of the printed product, the finalized information and the unfinalized information with a distinguishable appearance for each process.

2. The information processing system according to claim 1, wherein the one or more processors are configured to display, as the unfinalized information, a current status of the specifications that are not finalized.

3. The information processing system according to claim 2, wherein the one or more processors are configured to display a current status of one or more pieces of information from among received order information pertaining to a received order for the printed product, apparatus information pertaining to an apparatus used in the production of the printed product, consumables information pertaining to consumables used by the apparatus, and production manager information pertaining to a person in charge of each of the processes involved in the production of the printed product.

4. The information processing system according to claim 2 or 3, wherein the one or more processors are configured to display a current status of steps up to finalizing specifications.

5. The information processing system according to any one of claims 2 to 4, wherein the one or more processors are configured to display, in addition to the current status, information pertaining to impact due to specifications not being finalized.

6. The information processing system according to claim 5, wherein the one or more processors are configured to display, as the information pertaining to impact, a process that is impacted from among a plurality of processes for producing the printed product.

7. The information processing system according to claim 5, wherein the one or more processors are configured to display, as the information pertaining to impact, a printed product that is impacted from among a plurality of other printed products different from the printed product.

8. The information processing system according to claim 7, wherein the one or more processors are configured to further display a process that is impacted from among a plurality of processes for producing the printed product that is impacted.

9. The information processing system according to claim 8, wherein the one or more processors are configured to display the finalized information and the unfinalized information with a distinguishable appearance on a terminal operated by a person in charge of the process that is impacted, and not display the finalized information and the unfinalized information with a distinguishable appearance on a terminal operated by a person in charge of a process that is not impacted.

10. The information processing system according to claim 5, wherein the one or more processors are configured to output a predetermined warning according to a degree of the impact.

11. An information processing method comprising:
acquiring, as information pertaining to specifications of a printed product to be produced, finalized information pertaining to specifications that are finalized and unfinalized information pertaining to specifications that are not finalized; and
displaying, on a screen for managing processes involved in the production of the printed product, the finalized information and the unfinalized information with a distinguishable appearance for each process.

12. A program causing a computer to execute a process comprising:
acquiring, as information pertaining to specifications of a printed product to be produced, finalized information pertaining to specifications that are finalized and unfinalized information pertaining to specifications that are not finalized; and
displaying, on a screen for managing processes involved in the production of the printed product, the finalized information and the unfinalized information with a distinguishable appearance for each process.
